# EUROPEAN PATENT SPECIFICATION

(11) **EP 1 488 339 B1**
(45) Date of publication and mention of the grant of the patent: **30.08.2006**
(21) Application number: 01923704.9
(22) Date of filing: 30.03.2001
(51) Int. Cl.: G06F 17/30

(54) **DATA STREAM ADAPTATION SERVER**
SERVER ZUM ANPASSEN VON DATENSTRÖMEN
SERVEUR D'ADAPTATION DE TRAINS DE DONNEES

(30) Priority: 11.04.2000 EP 00890114
(43) Date of publication of application: 22.12.2004
(73) Proprietor: Koninklijke Philips Electronics N.V., 5621 BA Eindhoven (NL)
(72) Inventor: PROIDL, Adolf, NL-5656 AA Eindhoven (NL)
(74) Representative: van der Veer, Johannis Leendert
(86) International application number: PCT/EP2001/003648
(87) International publication number: WO 2001/077888

(56) References cited:
- WO-A-99/44149
- US-A- 5 822 524
- US-A- 5 928 330
- US-A- 5 940 074

## Description

The invention relates to data stream adaptation server as defined in the opening part of claim 1 and to a retrieval device as defined in the opening part of claim 6.

Such a data stream adaptation server and such a retrieval device are known from the document US-A-5,940,074. The known data stream adaptation server has receiving means connected to the Internet and to the telephone network in order to receive retrieval information from the known retrieval device. The known retrieval device is formed by a set-top box connected to the Internet. The set-top box is connected to a television set and executes a software program.

When in the set-top box an unforeseen operating condition of the software program occurs, in which for example graphical data for the display of graphics by means of the television set, the set-top box builds a connection to the receiving means of the data stream adaptation server. The data stream adaptation server includes source information memory means which store address information (URL: Uniform Resource Locator) of a data base server which has stored the graphical data required by the set-top box as well as other graphical data forming data stream information.

The known data stream adaptation server includes data stream retrieval means for the retrieval of the graphical data identified by the retrieval information. In addition, the data stream adaptation server checks whether in a given case only a part of the graphical data have to be downloaded from the data base server because the remainder of the graphical data has previously been transferred to the set top box and has been stored in the set-top box. Output means of the data stream adaptation server supply the graphical data partly or wholly to the set-top box as data stream information.

It has been found that the known data stream adaptation server has the drawback that the data stream information transferred from the data base server to the retrieval device via the data stream adaptation server is adapted only to the extent that in a given case parts of the data stream information are not transferred to the retrieval device.

It has been found that the known retrieval device has the drawback that the processing means of the retrieval device can process only such data stream information, received from the data base server via the data stream adaptation server, which has already been stored in the data base server in a manner or coding adapted to the processing possibilities of the retrieval device.

In US-A-5,822,524 a method is described for a client machine to retrieve multimedia data from a server machine with minimum latency and overhead. This is solved by a method of transmitting data packets derived from a compressed video file, where the server machine transmits the data packets at a transmission rate determined by the number of bytes of each individual video frame and not by a rate determined by the number of bytes per second to be transmitted.

It is an object of the invention to provide a data stream adaptation server in which the desired data stream information is adapted in such a manner that it can be processed by means of the retrieval device. It is a further object of the invention to provide a retrieval device which supports the adaptation of the desired data stream information by the data stream adaptation server. For a data stream adaptation server as defined in the opening part of claim 1 this object is achieved by the measures defined in the characterizing part of claim 1 and for a retrieval device as defined in the opening part of claim 6 said object is achieved by the measures defined in the characterizing part of claim 6.

In accordance with the measures defined in claims 1 and 6 data stream conversion means derive from the retrieval information mode information characteristic of the technical processing modes in which the retrieval device can process the data stream information. In response thereto, the data stream conversion means convert the data stream information retrieved from the data base server and encoded in accordance with a first coding into data stream information encoded in accordance with a second coding adapted in such a manner that the converted data stream information supplied to the retrieval device can really be processed by means of the retrieval device. It is then also possible that only a part of the retrieved data stream information (for example only the sound of a television program) is supplied to the retrieval device.

The conversion of the data stream information may be effected, for example, by decoding of audio data encoded in accordance with a first coding in the data base server and by encoding the decoded audio data into audio data encoded in accordance with a second coding, which can be processed in the retrieval device. Furthermore, the conversion may also be effected, for example, in that the decoded audio data are converted into an analog audio signal.

This has the advantage that the data stream information stored in the data base server is converted by the data stream adaptation server so as to enable it to be processed by the instantaneously active retrieval device. Thus, a vast amount of adapted data stream information is at the disposal of the user of the retrieval device, which information could not be processed by the retrieval device in the case of a direct retrieval of the data stream information from the data base server.

Moreover, the advantage is obtained that a provider of the data stream information stored on the data base server can store this information in a given manner or coding without thereby excluding a large number of retrieval devices from retrieving the stored data stream information, on account of the technical processing capabilities of the retrieval devices.

The measures defined in claim 2 have the advantage that the http protocol is already in widespread use and can be used by a multitude of retrieval devices to provide the mode information.

The measures defined in claim 3 have the advantage that the user of the retrieval device can directly reproduce the retrieved data stream information, for example a television movie. In addition, the advantage is obtained that the retrieval device need not have a large memory for the storage of all the data stream information because this information is reproduced directly in real time.

The measures defined in claim 4 have the advantage that the rtsp protocol is particularly suitable for the transfer and control of audio/video data in real time.

The measures defined in claim 5 have the advantage that data stream information requested frequently by retrieval devices has to be converted only once by the data stream adaptation server and can already be read out of the buffer memory and transferred to the retrieval device upon the next retrieval by a retrieval device.

The invention will now be described in more detail with reference to the Figures, which show three embodiments which are given by way of example but to which the invention is not limited.

Fig. 1 shows a data stream adaptation server connected to three retrieval devices and two data stream information sources via a computer network.

Fig. 2 shows a source information table, which is stored in source information memory means of the data stream adaptation server shown in Fig. 1.

Fig. 3 shows an allocation table, which is also stored in the source information memory means of the data stream adaptation server shown in Fig. 1.

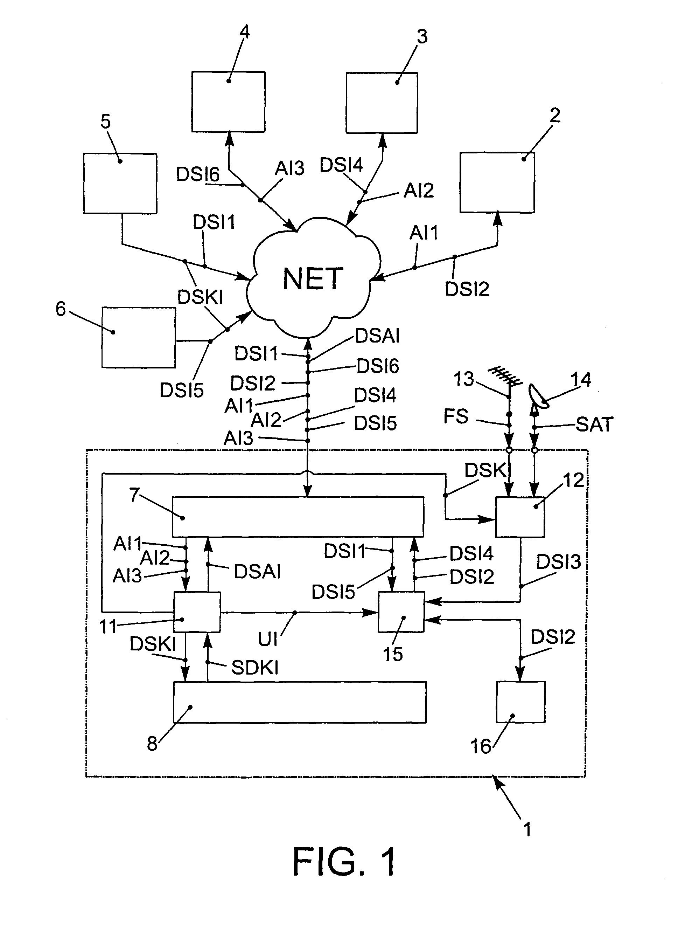

Fig. 1 is a block diagram showing a data stream adaptation server 1, a first retrieval device 2, a second retrieval device 3, a third retrieval device 4, a first data base server 5, a second data base server 6 and the Internet NET. This data stream adaptation server 1, these retrieval devices 2, 3 and 4 and these data base servers 5 and 6 are formed by computers which are adapted to transfer data stream information DSI over the Internet NET in accordance with the http protocol (Hyper Text Transfer Protocol) which is customary on the Internet or in accordance with the rtsp protocol (Real Time Stream Protocol).

The first data base server 5 and the second data base server 6 store data stream information DSI, which can be transferred over the Internet by the data base servers 5 and 6, the data base servers 5 and 6 thus forming data stream information sources. The data stream information DSI may contain, for example, audio information (for example, Real Audio, MP3), image information (for example, *.JPG, *.BMP), video information (for example, HDTV, SDTV, DVB, DVD, PAL, NTSC) or text information (for example, *.DOC, *.TXT, ASCII).

Each of the retrieval devices 2, 3 and 4 has retrieval means, receiving means and processing means, which are not shown in Fig. 1. The retrieval means are adapted to transfer retrieval information AI to the data stream adaptation server 1 over the Internet NET. For this purpose, the retrieval means store the internet address (for example, http://www.datastreaminformation.com) of the data stream adaptation server 1. The retrieval information AI includes data stream identification information DSKI and mode information MI, which is characteristic of the processing modes of the processing means of the retrieval device 2, 3 or 4, or allocation information FI, which will be described in detail with reference to the examples of use.

The receiving means of the retrieval devices 2, 3 and 4 are adapted to receive the data stream information DSI adapted to the respective retrieval device 2, 3 or 4 corresponding to the supplied retrieval information AI. The processing means of the retrieval devices 2, 3 and 4 can process the received adapted data stream information DSI, which will be described in detail hereinafter.

The data stream adaptation server 1 is configured to adapt a data stream information DSI to the respective retrieval device 2, 3 or 4 and has an interface 7. The interface 7 forms receiving means for receiving the retrieval information AI from one of the retrieval devices 2, 3 or 4 and output means for supplying the data stream information DSI. The retrieval information AI received by the interface 7 and the data stream information DSI supplied by the interface 7 are in accordance with the http protocol or the rtsp protocol.

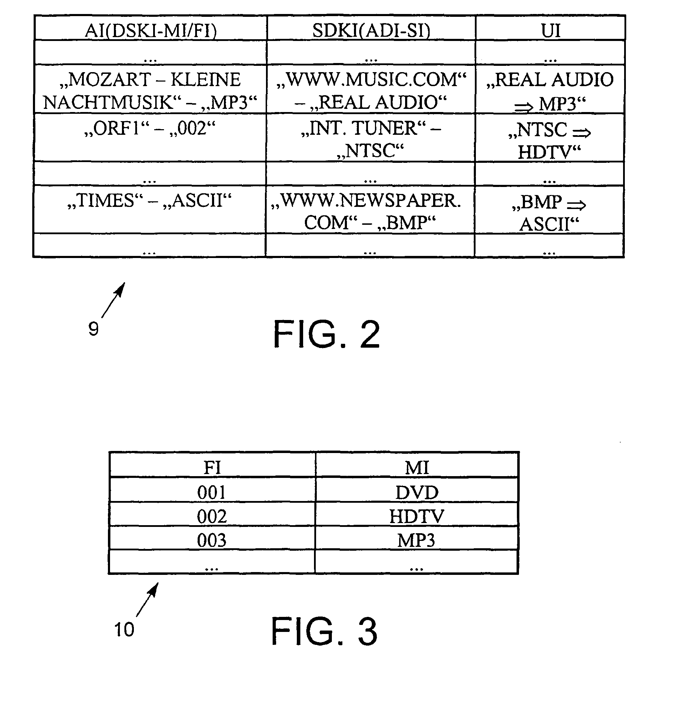

The data stream adaptation server 1 further includes source information memory means 8, which store a source information table 9 shown in Fig. 2 and an allocation table 10 shown in Fig. 3. A first column of the source information table 9 stores possible retrieval information AI(DSKI-MI/FI), which can be received by one of the retrieval devices 2, 3 or 4 and for each of which memory data identification information SKDI is stored in a second column. The memory data identification information SKDI includes address information ADI from data stream information sources which can supply the data stream information DSI corresponding to the possible retrieval information AI. The memory data identification information SKDI further includes memory information SI characteristic of the type or coding of the data stream information DSI that can be supplied by the data stream information sources.

A third column of the source information table 9 stores conversion information UI, which will be described in more detail hereinafter. The source information table 9 shown in Fig. 2 has only three rows containing information. However, the source information table 9 may have several thousands of entries and is periodically updated with new entries which identify data stream information DSI stored in data base servers newly connected to the Internet NET. This updating may be effected automatically or manually, as is known from Internet search engines.

The data stream adaptation server 1 further includes data stream retrieval means 11 for the retrieval of data stream information DSI corresponding to the received retrieval information AI from one of the data stream information sources. The data stream retrieval means 11 are adapted to supply data stream retrieval information DSAI to the interface 7.

The data stream retrieval information DSAI includes the address information ADI of the data stream information source which is stored in the source information table 9, correlated to the relevant received retrieval information AI. The data stream retrieval information DSAI further includes the data stream identification information DSKI of the received retrieval information AI.

The data stream adaptation server 1 further includes a tuner 12 arranged to receive a television signal FS from a terrestrial antenna 13 and a satellite signal SAT from a satellite antenna 14. The tuner 12 is arranged to receive the data stream identification information DSKI from the data stream retrieval means 11, upon which a television signal of the television channel identified by the data stream identification information DSKI can be supplied as third data stream information DSI3. The tuner 12 thus forms a data stream information source.

The data stream adaptation server 1 now includes data stream conversion means 15 adapted to convert the data stream information DSI requested from the data stream information source into data stream information DSI adapted to the processing modes of the retrieval device 2, 3 or 4, the processing modes of the retrieval device 2, 3 or 4 being defined by mode information MI included or defined in the retrieval information AI.

In the first example of use it is assumed that the first retrieval device 2 takes the form of an MP3 player by means of which audio information encoded in accordance with the MP3 coding can be reproduced acoustically. It is further assumed that the retrieval device 2 is connected to the Internet NET in order to download MP3 encoded pieces of music from the data base servers connected to the Internet. Finally, it is assumed that the user of the retrieval device whishes to hear Mozart's composition "KLEINE NACHTMUSIK" and has entered his wish into the retrieval means of the retrieval device 2 with the aid of the keys of the retrieval device 2.

The retrieval device 2 subsequently supplies first retrieval information AI1 to the data stream adaptation server 1 via the Internet. The first retrieval information AI1 then includes both the data stream identification information DSKI = "MOZART-KLEINE NACHTMUSIK" and the mode information MI = "MP3", which indicates that the first retrieval device 2 is adapted to process only data stream information DSI encoded in accordance with the MP3 coding.

The first retrieval information AI1 received by the interface 7 is applied from the interface 7 to the data stream retrieval means 11. The data stream retrieval means 11 subsequently determine whether the source information table 9 stored in the source information memory means 8 contains such retrieval information AI. Since this first retrieval information AI1 appears in the third row of the source information table 9, the data stream retrieval means 11 detect the memory data information SDKI = "WWW.MUSIK.COM - REAL AUDIO" appearing in the third row.

As a result of this, the data stream retrieval means 11 receive the information that the piece of music desired by the user of the first retrieval device 2 is stored in accordance with the REAL AUDIO coding in the first data base server 5 with the address information ADI = "WWW.MUSIK.COM". The data stream retrieval means 11 subsequently detect the conversion information UI = "REAL AUDIO ⇒ MP3" contained in the third row of the source information table 9 and supply this to the data stream conversion means 15.

The data stream retrieval means 11 further supply the data stream retrieval information DSAI to the interface 7, which information includes both the address information ADI = "WWW.MUSIK.COM" of the first data base server 5 and the data stream identification information DSKI = "MOZART-KLEINE NACHTMUSIK". The interface 7 subsequently transfers this data stream identification information DSKI to the first data base server 5, which supplies the piece of music "KLEINE NACHTMUSIK" encoded in accordance with the REAL AUDIO coding to the data stream adaptation server 1 as first data stream information DSI1.

The first data stream information DSI1 received by the interface 7 is supplied to the data stream conversion means 15, by which it is converted into second data stream information DSI2. The data stream conversion means 15 are adapted, in response to the applied conversion information UI = "REAL AUDIO ⇒ MP3", to decode the REAL AUDIO encoded first data stream information DSI DSI1, to MP3 encode the decoded first data stream information DSI1 and to supply the MP3 encoded second data stream information DSI2 to the interface 7. Thereupon, the interface 7 is adapted to supply the second data stream information DSI2 to the first retrieval device 2 via the Internet NET.

This has the advantage that the first retrieval device 2 has received second data stream information DSI2 that can be processed by the processing means of the first retrieval device 2 and the user can listen to the "KLEINE NACHTMUSIK" although there is no data stream information source which stores the "KLEINE NACHTMUSIK" in the MP3 coding suitable for the MP3 player. The user of the first retrieval device 2 consequently has at his disposal a substantially larger number of music pieces stored in data stream information sources than in the case that he could only choose from pieces of music encoded in accordance with the MP3 coding.

The provider of the first data base server 5, who receives a payment for each time that data stream information DSI is downloaded by a retrieval device 2, 3 or 4, has the advantage that the pieces of music (data stream information DSI) stored in the first data base server 5 can be downloaded by a substantially larger number of retrieval devices than in the case that data stream information DSI could be downloaded only from the first data base server 5 by retrieval devices capable of directly processing the supplied data stream information DSI. An additional advantage is that each piece of music has to be stored only once in accordance with a coding in the first data base server 5 and consequently memory space is saved in the first data base server 5.

In the first example of use it is further assumed that this piece of music "KLEINE NACHTMUSIK" was retrieved from the data stream adaptation server 1 by retrieval devices very often within a short time, for which reason the data stream adaptation server 1 has buffer memory means 16 for the intermediate storage of converted data stream information such as the second data stream information DSI2.

This has the advantage that for the next retrieval of this piece of music the data stream conversion means 11 need not again convert the first data stream information DSI1 into the second data stream information DSI2, but that this information can be retrieved from the buffer memory means 16, which saves computing time of the data stream conversion means 11. Data stream information DSI stored in the buffer memory means 16 may be erased, for example, every fortnight in order to ensure that only data stream information DSI which is retrieved very often is buffered.

In a second example of use it is assumed that the second retrieval device 3 takes the form of a HDTV television set, which is capable of reproducing television information encoded in accordance with the HDTV standard. It is further assumed that the second retrieval device 3 is connected to the Internet NET in order to download HDTV encoded films from data base servers connected to the internet. Finally, it is assumed that the user of the second retrieval device 3 wishes to view the television program currently broadcast by the television station "CNN" in real time and has entered this wish into the retrieval means of the second retrieval device 3 with keys of the second retrieval device 3. It is to be noted that the television station "CNN" transmits television programs in accordance with the NTSC television standard as an analog satellite signal SAT.

The retrieval means of the second retrieval device 3 subsequently transfer second retrieval information AI2 = "CNN"-"002" to the data stream retrieval means 11 via the Internet NET and the interface 7. Thereupon, the data stream retrieval means 11 determine the mode information MI from the allocation table 10 with the aid of the allocation information FI = "002" included in the retrieval information AI2. Since the second retrieval device 3 has previously requested downloads from the data stream adaptation server 1 the mode information MI = "HDTV" of the device is already stored in the allocation table 10 correlated to the allocation information FI of the second retrieval device 3.

This has the advantage that the retrieval information AI includes the allocation information FI, which has only a few positions, instead of the mode information MI, which has a multitude of positions in the case that a retrieval device has a multitude of technical processing modes. Thus, the amount of data to be transferred as retrieval information AI is minimized, which is advantageous.

The data stream conversion means 11 subsequently determine, with the aid of the memory data identification information SDKI = "INT.TUNER"-"NTSC" derived from the source information table 9, that the television signal in accordance with the NTSC standard is received from the television station "CNN" by the tuner 12. The data stream conversion means 11 therefore supply the data stream identification information DSKI = "CNN" to the tuner 12, which subsequently supplies the television signal from the television station "CNN" contained in the satellite signal SAT to the data stream conversion means 15 as third data stream information DSI3.

With the aid of the conversion information UI = "NTSC ⇒ HDTV" determined by the data stream retrieval means 11 and supplied to the data stream conversion means 15 the data stream conversion means 15 are now adapted to convert the analog data stream information DSI3 into digital fourth data stream information DSI4 encoded in accordance with the HDTV standard. The data stream conversion means 15 now transfer the fourth data stream information DSI4 to the second retrieval device 3, from which the second retrieval information AI2 was received, via the interface 7 and the Internet NET.

The second example of use clearly illustrates the advantage that the data stream conversion means 15 can convert, in real time, data stream information DSI from an arbitrary data stream information source into data stream information DSI that can be processed by the relevant retrieval device. A multitude of further conversion possibilities will be conceivable to one skilled in the art.

In a third example of use it is assumed that the third retrieval device 4 takes the form of a display computer capable of displaying text information encoded as ASII text. It is further assumed that the third retrieval device 4 is connected to the Internet NET in order to download electronic newspapers and electronic books from data base servers connected to the Internet NET. Finally, it is assumed that the user of the third retrieval device 4 wishes to read the newspaper "TIMES" and has entered this wish into the retrieval means of the third retrieval device 4 with the aid of keys of the third retrieval device 4.

The retrieval means of the third retrieval device 4 subsequently supply third retrieval information AI3 = "TIMES"-"ASCII" to the data stream retrieval means 11 via the Internet NET and the interface 7. The data stream retrieval means 11 subsequently derive from the source information table 9 that the second data base server 6 with the address information ADI = "WWW.NEWSPAPER.COM" stores the newspaper "TIMES" in accordance with a bit map encoding BMP. The data stream retrieval means 11 supply the conversion information UI = "BMP ⇒ ASCII", which has also been derived from the source information table 9, to the data stream conversion means 15 and supply data stream identification information DSKI = "TIMES"to the second data base server 6 via the interface 7.

Fifth data stream information DSI5, which is subsequently received by the second data base server 6, is received by the interface and transferred to the data stream conversion means 15. The data stream conversion means 15 are thus adapted to convert the bit-map encoded fifth data stream information DSI5 into sixth data stream information DSI6 encoded in accordance with the ASCII code. The sixth data stream information DSI6 is transferred from the data stream conversion means 15 to the third retrieval device 4, from which the third retrieval information AI3 was received, via the interface 7 and the Internet NET.

This has the advantage that the user of the display computer can read the newspaper "TIMES" although the newspaper "TIMES" is not stored in an ASCII code, which can be processed by the display computer, neither by any data stream information sources connected to the Internet nor by any further data stream information sources not connected to the Internet NET.

It is to be noted that the manner of allocating the information in the source information table 9 and in the allocation table 10 is merely an example. Thus, it is possible, for example, to store only the data stream identification information DSKI and not the complete retrieval information AI(DSKI-MI/Fi) in the first column of the source information table 9, because the mode information also forms part of the conversion information UI.

It is to be noted that if the data stream information DSI requested by a retrieval device is available from a plurality of data base servers in different codes the data stream retrieval means transfer the data stream retrieval information to that data base server whose data stream information DSI can be converted most efficiently into the adapted data stream information by the data stream conversion means. The data stream retrieval means then alllow for the encoding means and decoding means available in the data stream conversion means and the current utilization of the encoding means and the decoding means.

It is to be noted that the allocation table may contain a multitude of technical processing modes of a retrieval device characterized by the allocation information. For example, for a retrieval device in the form of a video recorder the information: PAL, SHOWVIEW PROGRAMMING, VPS, TELETEXT ... could be given to characterize adapted data stream information that can be processed by the video recorder.

It is to be noted that an interesting method of doing business is obtained for an operator of the data stream adaptation server, because he may receive payment for each conversion of data stream information both from the provider of the data stream information stored on the data base server and from the user of the retrieval device because they both profit.

It is to be noted that, particularly in the case of a transfer of audio/video data in real time, i.e. without intermediate storage, the rtsp protocol is particularly advantageous. By means of this rtsp protocol it is also possible to transfer control information (for example, play, stop) for controlling the transfer of audio/video data.

It is to be noted that retrieval information may also be transferred to the data stream adaptation server as an analog signal, for example via a telephone.

## Claims

1. A data stream adaptation server (1), connected to a computer network (NET), for the adaptation of data stream information (DSI1, DSI3, DSI5), including receiving means (7) for receiving retrieval information (AI1, AI2, AI3) from a retrieval device (2, 3, 4) connected to the computer network (NET), and including source information memory means (8) for the storage of address information (ADI) of data stream information sources (5, 6) which can supply data stream information (DSI1, DSI3, DSI5) corresponding to possible retrieval information (AI1, AI2, AI3), and including data stream retrieval means (11) for retrieving data stream information (DSI1, DSI3, DSI5) corresponding to the retrieval information (AI1, AI2, AI3) from one of the data stream information sources (5, 6), and including
supply means (7) for the supply of the data stream information (DSI2, DSI4, DSI6) to the retrieval device (2, 3, 4) via the computer network (NET),
**characterized in that** data stream conversion means (15) are included, which means are adapted to convert the data stream information (DSI1, DSI3, DSI5) retrieved from the data stream information source (5, 6) and encoded in accordance with a first coding into data stream information (DSI2, DS4, DS6) encoded in accordance with a second coding adapted to the processing capabilities of the retrieval device (2, 3, 4), the processing capabilities of the retrieval device (2, 3, 4) being specified by mode information (MI) included or specified in the retrieval information (AI1, AI2, AI3).

2. A data stream adaptation server (1) as claimed in claim 1, **characterized in that** the retrieval information (AI1, AI2, AI3) is encoded in accordance with the http protocol Hyper Text Transfer Protocol and the data stream conversion means (15) are adapted to derive the mode information (MI) from the http protocol.

3. A data stream adaptation server (1) as claimed in claim 1, **characterized in that** the processing speed of the data stream conversion means (15) enables the retrieved data stream information (DSI1, DSI3, DSI5) to be adapted in real time.

4. A data stream adaptation server (1) as claimed in claim 3, **characterized in that** the data stream conversion means (15) are adapted to encode the data stream information (DSI2, DSI4, DSI6) adapted to the retrieval device (2, 3, 4) in accordance with the rtsp protocol, Real Time Stream Protocol

5. A data stream adaptation server (1) as claimed in claim 1, **characterized in that** buffer memory means (16) for the storage of the adapted data stream information (DSI2, DS4, DS6) are included.

6. A retrieval device (2, 3, 4), connected to the computer network (NET), for the retrieval of data stream information (DSI2, DSI4, DSI6), including
retrieval means for the transfer of retrieval information (AI1, AI2, AI3) to a data stream adaptation server (1) connected to a computer network (NET), and including
receiving means for receiving data stream information (DSI2, DSI4, DSI6) corresponding to the retrieval information (AI1, AI2, AI3) from the data stream adaptation server (1), and including
processing means for processing the received data stream information **(DSI2, DSI4, DSI6), characterized in that** the retrieval means are adapted to supply mode information specifying the processing capabilities of the retrieval means as part of the retrieval information (AI1, AI2, AI3) and that said processing means are adapted for converting the data stream information (DSI1, DSI3, DSI5) retrieved from the data stream information source (5, 6) and encoded in accordance with a first coding into data stream information (DSI2, DS4, DS6) encoded in accordance with a second coding adapted to the processing capabilities of the retrieval device (2, 3, 4).

## Patentansprüche

1. Server zum Anpassen von Datenströmen (1), welcher mit einem Computernetzwerk (NET) verbunden ist, für die Anpassung von Datenstrominformationen (DSI1, DSI3, DSI5), umfassend ein Empfangsmittel (7) zum Empfangen von Abrufinformationen (AI1, AI2, AI3) von einer Abrufvorrichtung (2, 3, 4), welche mit dem Computernetzwerk (NET) verbunden ist, und umfassend ein Quellinformations-Speichermittel (8) für die Speicherung von Adressinformationen (ADI) der Datenstrom-Informationsquellen (5, 6), welche Datenstrominformationen (DSI1, DSI3, DSI5) entsprechend möglichen Abrufinformationen (AI1, AI2, AI3) liefern können, und umfassend ein Datenstrom-Abrufmittel (11) zum Abrufen von Datenstrominformationen (DSI1, DSI3, DSI5) entsprechend der Abrufinformationen (AI1, AI2, AI3) von einer der Datenstrom-Informationsquellen (5, 6), und umfassend
ein Liefermittel (7) für die Lieferung der Datenstrominformationen (DSI2, DSI4, DSI6) über das Computernetzwerk (NET) an die Abrufvorrichtung (2, 3, 4),
**dadurch gekennzeichnet, dass** ein Datenstrom-Umwandlungsmittel (15) eingeschlossen ist, dessen Mittel angepasst ist, die Datenstrominformationen (DSI1, DSI3, DSI5), welche von der Datenstrom-Informationsquelle (5, 6) abgerufen werden und gemäß einer erster Codierung codiert sind, in Datenstrominformationen (DSI2, DS4, DS6) umzuwandeln, welche gemäß einer zweiten Codierung codiert sind, welche an die Verarbeitungsfähigkeiten der Abrufvorrichtung (2, 3, 4) angepasst sind, wobei die Verarbeitungsfähigkeiten der Abrufvorrichtung (2, 3, 4) durch Modusinformationen (MI) spezifiziert werden, welche in den Abrufinformationen (AI1 AI2, AI3) eingeschlossen oder spezifiziert sind.

2. Server zum Anpassen von Datenströmen (1) nach Anspruch 1, **dadurch gekennzeichnet, dass** die Abrufinformationen (AI1, AI2, AI3) gemäß des HTTP-Protokolls, Hyper Text Transfer Protocol, Hypertext-Ubertragungsprotokoll, codiert sind und das Datenstrom-Umwandlungsmittel (15) angepasst ist, die Modusinformationen (MI) aus dem HTTP-Protokoll abzuleiten.

3. Server zum Anpassen von Datenströmen (1) nach Anspruch 1, **dadurch gekennzeichnet, dass** die Verarbeitungsgeschwindigkeit des Datenstrom-Umwandlungsmittels (15) ermöglicht, dass die abgerufenen Datenstrominformationen (DSI1, DSI3, DSI5) in Echtzeit angepasst werden.

4. Server zum Anpassen von Datenströmen (1) nach Anspruch 3, **dadurch gekennzeichnet, dass** das Datenstrom-Umwandlungsmittel (15) angepasst ist, die Datenstrominformationen (DSI2, DSI4, DSI6), welche an die Abrufvorrichtung (2, 3, 4) angepasst sind, gemäß des RTSP-Protokolls, Real Time Stream Protocol, Echtzeitstrom-Protoköll, zu codieren.

5. Server zum Anpassen von Datenströmen (1) nach Anspruch 1, **dadurch gekennzeichnet, dass** ein Pufferspeichermittel (16) für die Speicherung der angepassten Datenstrominformationen (DSI2, DSI4, DSI6) eingeschlossen ist.

6. Abrufvorrichtung (2, 3, 4), welche mit dem Computernetzwerk (NET) verbunden ist, für das Abrufen von Datenstrominformationen (DSI2, DSI4, DSI6), umfassend
ein Abrufmittel für das Übermitteln von Abrufinformationen (AI1, AI2, AI3) an einen Server zum Anpassen von Datenströmen (1), welcher mit einem Computernetzwerk (NET) verbunden ist, und umfassend
ein Empfangsmittel zum Empfangen von Datenstrominformationen (DSI2, DSI4, DSI6) entsprechend der Abrufinformationen (AI1, AI2, AI3) von dem Server zum Anpassen von Datenströmen (1), und umfassend
ein Verarbeitungsmittel zum Verarbeiten der empfangenen Datenstrominformationen (DSI2, DSI4, DSI6), **dadurch gekennzeichnet, dass** das Abrufmittel angepasst ist, Modusinformationen zu liefern, welche die Verarbeitungsfähigkeiten des Abrufmittels als ein Teil der Abrufinformationen (AI1, AI2, AI3) spezifizieren, und dass das Verarbeitungsmittel zum Umwandeln der Datenstrominformationen (DSI1, DSI3, DSI5), welche aus der Datenstrom-Informationsquelle (5, 6) abgerufen werden und gemäß einer erster Codierung codiert sind, in Datenstrominformationen (DSI2, DS4, DS6) angepasst ist, welche gemäß einer zweiten Codierung codiert sind, welche an die Verarbeitungsfähigkeiten der Abrufvorrichtung (2, 3, 4) angepasst ist.

## Revendications

1. Serveur d'adaptation de trains de données (1), connecté à un réseau informatique (NET), pour l'adaptation d'informations de trains de données (DSI1, DSI3, DSI5), comprenant :
des moyens de réception (7) destinés à recevoir des informations d'extraction (AI1, AI2, AI3) provenant d'un dispositif d'extraction (2, 3, 4) connecté au réseau informatique (NET),
des moyens de mémoire d'informations de source (8) destinés au stockage d'informations d'adresse (ADI) de sources d'informations de trains de données (5, 6) qui peuvent fournir des informations de trains de données (DSi1, DSI3, DSI5) correspondant à des informations d'extraction possibles (AI1, AI2, AI3),
des moyens d'extraction de trains de données (11) destinés à extraire des informations de trains de données (DSI1, DSI3, DS15) correspondant aux informations d'extraction (AI1, AI2, AI3) provenant de l'une des sources d'informations de trains de données (5, 6), et
des moyens de fourniture (7) destinés à fournir les informations de trains de données (DSI2, DSI4, DSI6) au dispositif d'extraction (2,3, 4) par le biais du réseau informatique (NET),
**caractérisé en ce que** des moyens de conversion de trains de données (15) sont prévus, lesquels moyens sont aptes à convertir les informations de trains de données (DSI1, DSI3, DSI5) extraites de la source d'informations de trains de données (5, 6) et codées suivant un premier codage en informations de trains de données (DSI2, DS4, DS6) codées suivant un second codage adapté aux capacités de traitement du dispositif d'extraction (2, 3, 4), les capacités de traitement du dispositif d'extraction (2, 3, 4) étant spécifiées par les informations de mode (MI) comprises ou spécifiées dans les informations
d'extraction (AI1, AI2, AI3).

2. Serveur d'adaptation de trains de données (1) suivant la revendication (1), **caractérisé en ce que** les informations d'extraction (AI1, AI2, AI3) sont codées conformément au protocole HTTP, HypertText Transfer Protocol, et les moyens de conversion de trains de données (15) sont aptes à dériver les informations de mode (MI) à partir du protocole HTTP.

3. Serveur d'adaptation de trains de données (1) suivant la revendication 1, **caractérisé en ce que** la vitesse de traitement des moyens de conversion de trains de données (15) permet l'adaptation des informations de trains de données extraites (DSI1, DSI3, DSI5) en temps réel.

4. Serveur d'adaptation de trains de données (1) suivant la revendication 3, **caractérisé en ce que** les moyens de conversion de trains de données (15) sont aptes à coder les informations de trains de données (DSI2, DSI4, DSI6) adaptées au dispositif d'extraction (2, 3, 4) conformément au protocole RTSP (Real Time Streaming Protocol).

5. Serveur d'adaptation de trains de données (1) suivant la revendication 1, **caractérisé en ce que** des moyens de mémoire tampon (16) pour le stockage des informations de trains de données adaptées (DSI2, DSI4, DSI6) sont prévus.

6. Dispositif d'extraction (2, 3, 4), connecté à un réseau informatique (NET), pour l'extraction d'informations de trains de données (DSI2, DSI4, DSI6), comprenant
des moyens d'extraction pour le transfert d'informations d'extraction (AI1, AI2, AI3) au serveur d'adaptation de trains de données (1) connecté à un réseau informatique (NET);
des moyens de réception destinés à recevoir des informations de trains de données (DSI2, DSI4, DSI6) correspondant aux informations d'extraction (AI1, AI2, AI3) provenant du serveur d'adaptation de trains de données, et
des moyens de traitement destinés à traiter les informations de trains de données reçues (DSI2, DSI4, DSI6),
**caractérisé en ce que** les moyens d'extraction sont aptes à fournir des informations de mode spécifiant les capacités de traitement des moyens d'extraction en tant que partie des informations d'extraction (AI1, AI2, AI3) et **en ce que** lesdits moyens de traitement sont aptes à convertir les informations de trains de données (DSI1, DSI3, DSI5) extraites de la source d'informations de trains de données (5, 6) et codées suivant un premier codage en informations de trains de données (DSI2, DSI4, DSI6) codées suivant un second codage adapté aux capacités de traitement du dispositif d'extraction (2, 3, 4).
